# EUROPEAN PATENT SPECIFICATION

(11) **EP 0 968 123 B1**
(45) Date of publication and mention of the grant of the patent: **15.05.2002**
(21) Application number: 98955618.8
(22) Date of filing: 20.11.1998
(51) Int. Cl.: B65F 1/00, B65F 1/14, B02C 18/00

(54) **WASTE PAPER HANDLING UNIT**
EINHEIT ZUM HANDHABEN VON PAPIERABFÄLLEN
UNITE DE MANIPULATION DE DECHETS DE PAPIER

(30) Priority: 20.11.1997 FI 970515 U; 14.01.1998 FI 980015 U
(43) Date of publication of application: 05.01.2000
(73) Proprietor: Kaakon Pintapelti Oy, 53810 Lappeenranta (FI)
(72) Inventor: HYTTINEN, Matti, Kalevi, FIN-53810 Lapeenranta (FI)
(74) Representative: Helino, Timo Kalervo
(86) International application number: FI9800912
(87) International publication number: WO9926867

(56) References cited:
- WO-A1-91/05720
- DE-A1- 2 817 740
- GB-A- 2 187 112
- US-A- 4 041 856
- US-A- 5 137 212
- US-A- 5 429 313

## Description

The invention is related to waste paper handling and sorting.
Waste paper is produced in different places, like in offices, at home, in schools and in industry. Nowadays waste paper has to be sorted in order to improve the quality of recycled material and to make the recycling process more efficient. The packing and sorting of waste paper makes its processing more efficient. There is no system or device for sorting waste paper in places where it is produced. Blocking devices have been made for packing waste paper. The registered PCT-model number 2522 introduces a blocking device for packing magazines and paper sheets. Part of the waste paper in offices must be destroyed, and the information on the papers may not be readable after handling. Paper shredders are used for destroying papers. Shredding machines are units with a cutting and collecting device; usually there is a plastic bag or box for collecting the paper. From the collecting bag or box the waste paper is delivered for further processing without any packing.

There are a lot of problems related to collecting and sorting systems of waste paper. Unsorted waste paper causes handling and quality problems in the deinking process. One of the main problems in processing is plastic for instance. Plastic can be part of the packing and blocking material.
The purpose of this innovation is to introduce a waste paper handling unit, which can solve the problems mentioned earlier. With a unit in accordance with the innovation waste paper is handled and sorted in the place where it is produced. With the unit sheets and magazines are collected, sorted and packed. shredded waste paper can be packed in a recycleable way. The handling of waste paper is carried out in a rational way by using this collecting unit. The unit contains the storage unit for packing, which helps to prevent plastics from getting mixed with waste paper.

The waste paper handling unit in accordance with the innovation has remarkable benefits. The process of handling and packing is controlled, and plastics and other impurities can not be mixed with waste paper. Paper is sorted for recycling, shredded paper can be packed inside the unit and the packing is suitable for the recycling process.

The features of the waste paper handling unit in accordance with the invention are defined in claim 1. Embodiments thereof can be found in in the dependent claims.

A preferred waste paper handling unit is shown in the description and the enclosed drawings as follows:

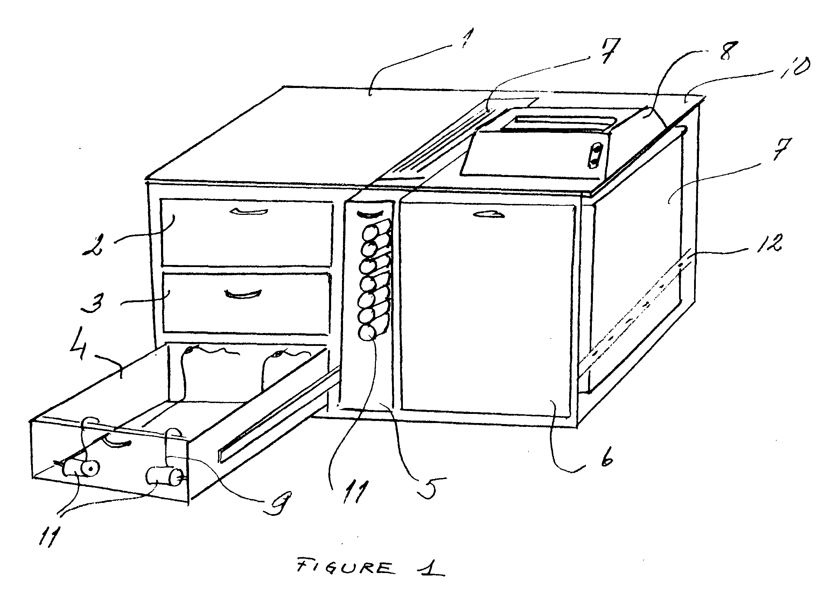

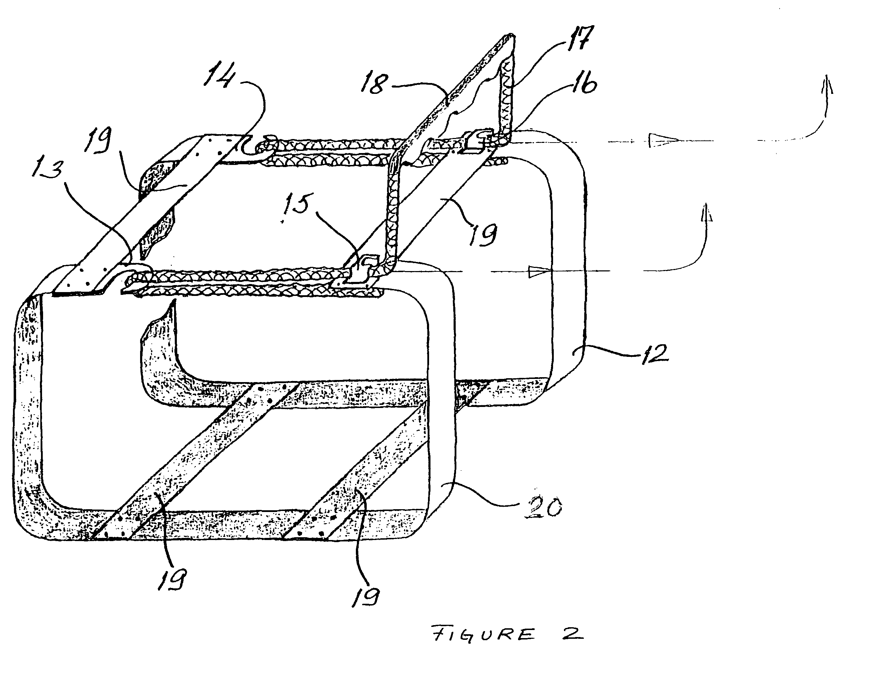

In figure 1 the unit is shown from above.
The structure of the binding unit can be seen in figure 2.

The waste paper handling unit contains parts 2,3 and 4 for sorting and binding. The shredder 8, the collecting and packing device 6 for chopped paper and storage 5 for packing material. The sorting boxes 2,3 and 4 are equipped with a binding device 9. Parts 2,3 and 4 are designed for sorting and binding different paper types such as sheets, news papers, magazines etc. The shredder is located at the top 10 of the waste paper handling unit.

After the chopping process the waste paper is collected in the packing box 7, where the paper is stored for transportation. The box 7 is made of recyclable waste paper material, which means that it can be processed with the waste material. The waste paper handling unit includes a storage box for packing material 5, where the collecting boxes for chopped paper 7 and the binding material can be stored.
The structure of the binding unit according to the innovation can be seen in figure 1.

The binding unit is shown in fig. 2. It contains bands 20 and 12, which are equipped with hooks 13 and 14. The other ends of the bands are equipped with locking devices 15 and 16. The binding device includes the tension band 17 with the handle 18. The ends of tension band 17 are fastened to the binding bands 20 and 12 at the location of the locking device. The tension band runs through the locking device. The binding bands are fastened to each other by connection pieces 19 at a specified distance. The function of the binding device, the binding device is located at the bottom of the collecting box, where the waste paper is to be collected.
The fastening devices 13 and 14, located at the ends of the binding bands 20 and 12, are fastened to the hooks at the upper top of the box. The locking devices 15 and 16 are fastened to the other side of the box in the same way. The collected paper is placed into the box on the binding device. When the paper is removed from the box, the tension band 17 is fastened to the locking devices 13 and 14, the handle 18 is pulled and raised, when the block is tightened. The block can be removed and carried by the handle 18. The block is released from the binding device at the waste paper collecting point. The binding device can now be returned into the collecting box.

## Claims

1. Waste paper handling unit (1), wherein it contains sorting and packing devices (2,3,4) for sheet papers and magazines, which include binding devices (9), a paper chopper (8) located at the top (10) of the unit and a collecting / packing device (6) with a packing box (7), located under the chopper.

2. Waste paper handling unit (1) according to the claim number 1, wherein the packing box for chopped paper is made of the same material as chopped paper.

3. Waste paper handling unit (1) according to claims 1 and 2, wherein the unit (1) contains a storage part (5) for storing foldable packing boxes (7) and binding material (11).

4. Waste paper handling unit (1) according to claims 1-3, wherein the binding devices (2,3,4), the chopper (8), the collecting and packing device (6) and the storage part (5) are separate units.

5. Waste paper handling unit (1) according to claims 1-4, wherein it contains a binding device for blocking waste paper during storage and transportation, the binding device contains binding bands (20, 12), which are connected to each other by the connection piece (19), and at one end of the binding bands fastening devices (13, 14) and at the other end locking devices (15, 16), where there is a tension band (7), which runs through the locking devices (13, 14) and is locked during transportation.

## Patentansprüche

1. Abfallpapier-Verarbeitungsgerät (1), **dadurch gekennzeichnet, daß** es mit Bindevorrichtungen (9) versehene Sortier- und Bindeeinheiten (2, 3, 4) für Papierblätter und Zeitschriften aufweist, femer einen an der Oberseite (10) des Gerätes angeordneten Papier-Reißwolf (8) sowie eine unterhalb des letzteren angeordnete Aufnahme- und Packeinheit (6) mit Packbox (7).

2. Abfallpapier-Verarbeitungsgerät (1) nach Anspruch 1, **dadurch gekennzeichnet, daß** die Packbox (7) für Papierhäcksel aus Papierhäcksel-Material besteht.

3. Abfallpapier-Verarbeitungsgerät (1) nach Anspruch 1 oder 2, **dadurch gekennzeichnet, daß** das Gerät (1) ein Aufnahmeabteil (5) zur Ablage von Packboxen (7) und Bindematerial (11) aufweist.

4. Abfallpapier-Verarbeitungsgerät (1) nach einem der Ansprüche 1 bis 3, **dadurch gekennzeichnet, daß** die Bindeeinheiten (2, 3, 4), der Reißwolf (8), die Aufnahme- und Packeinheit (6) sowie das Aufnahmeabteil (5) als Einzeleinheiten ausgebildet sind.

5. Abfallpapier-Verarbeitungsgerät (1) nach einem der Ansprüche 1 bis 4, **dadurch gekennzeichnet, daß** es eine Bindevorrichtung zum Verblocken von Abfallpapier für Zwischenlagerung und Transport aufweist, wobei die Bindevorrichtung Bänder (12, 20) hat, die miteinander durch Verbindungsstücke (19) verbunden sind, wobei an einem Ende der Bänder (12, 20) Befestigungsmittel (13, 14) sowie am anderen Ende Fixiermittel (15, 16) vorhanden sind und wobei die letzteren von einem Spannband (17) durchsetzt sind, das beim Transport fixiert ist.

## Revendications

1. Unité (1) de traitement de vieux papiers, comprenant des organes (2, 3, 4) de triage et d'emballage pour des feuilles de papier et des magazines, les organes comportant des moyens (9) de liaison, l'unité comprenant en outre un broyeur (8) de papier situé sur le dessus (10) de l'unité et un organe (6) de collecte/emballage avec une boîte (7) d'emballage située sous le broyeur.

2. Unité (1) de traitement de vieux papiers selon la revendication 1, dans laquelle la boîte d'emballage pour papier broyé est faite du même matériau que le papier broyé.

3. Unité (1) de traitement de vieux papiers selon la revendication 1 ou 2, comprenant une partie (5) de stockage pour stocker des boîtes (7) d'emballage pliables et un matériau (11) de liage.

4. Unité (1) de traitement de vieux papiers, dans laquelle les organes (2, 3, 4) de liage, le broyeur (8), l'organe (6) de collecte et d'emballage et la partie (5) de stockage sont des éléments distincts.

5. Unité (1) de traitement de vieux papiers selon l'une des revendications 1 à 4, comprenant un organe de liaison pour bloquer les vieux papiers durant le stockage et le transport, l'organe de liaison comportant des bandes de liaison (20, 12) qui sont reliées les unes aux autres par des pièces (19) de connection et à une extrémité des bandes de liaison des éléments (13, 14) de fixation et à l'autre extrémité des éléments (15, 16) de verrouillage, où passe une bande (17) de tension qui s'étend à travers les éléments (13, 14) de fixation et qui est verrouillée pendant le transport.
